(19) Europäisches Patentamt
European Patent Office
Office européen des brevets

(11) **EP 4 545 295 A1**

(12) **EUROPEAN PATENT APPLICATION**
published in accordance with Art. 153(4) EPC

(43) Date of publication:
**30.04.2025 Bulletin 2025/18**

(21) Application number: **23827264.5**

(22) Date of filing: **22.06.2023**

(51) International Patent Classification (IPC):
**B32B 27/00** $^{(2006.01)}$    **E04F 15/02** $^{(2006.01)}$

(52) Cooperative Patent Classification (CPC):
**B32B 27/00; E04F 15/02**

(86) International application number:
**PCT/JP2023/023147**

(87) International publication number:
**WO 2023/249082 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **24.06.2022   JP 2022102037**

(71) Applicant: **Toppan Holdings Inc.
Tokyo 110-0016 (JP)**

(72) Inventor: **AKUTSU, Erika
Tokyo 110-0016 (JP)**

(74) Representative: **TBK
Bavariaring 4-6
80336 München (DE)**

(54) **DECORATIVE SHEET**

(57)    A decorative sheet that provides a rough feel to the touch is provided. The decorative sheet (1) includes a primary film layer (2), and a surface protective layer (5) provided on one surface of the primary film layer (2). A surface of the surface protective layer (2) has an uneven structure including a plurality of ridged portions protruding in a ridged shape, and the uneven structure of the surface protective layer (5) has a reduced peak height Rpk of 3.5 μm or more.

FIG.1

**Description**

[Technical Field]

The present invention relates to decorative sheets.

[Background Art]

Decorative sheets are used to decorate the surfaces of interior and exterior materials such as fittings, furniture, construction materials, and flooring, for the purpose of imparting design properties and durability to these materials. Generally, decorative sheets are widely used as decorative panels that are attached via an adhesive or the like to the surface of a substrate such as wood, a wood board, a metal plate, a non-flammable board, a paper substrate, or a resin substrate.

Design properties are imparted by forming patterns such as wood grain and stone grain using various printing methods. Plain decorative sheets without patterns are sometimes preferred. The choice of whether the sheet has a pattern, and the type of pattern, varies depending on the application and preference.

The gloss of the surface is also an important design property of decorative sheets. There are a variety of decorative sheets to choose from depending on the application and preference, ranging from high gloss sheets like mirror surfaces to low gloss sheets with no reflection at all.

As described above, in addition to imparting design properties, another important function of a decorative sheet is to impart durability. Durability is a comprehensive evaluation of scratch resistance and stain resistance, and whether they can be maintained over a long period of time. Although requirements vary depending on the environment and circumstances in which the decorative sheet is used, there is always a demand for decorative sheets with high performance.

To impart durability, typically, a surface protective layer is formed on the outermost surface of the decorative sheet. To adjust the above-mentioned gloss, particularly to achieve low gloss, it is common to add a matting agent (matting additive) to the surface protective layer.

Further, since decorative sheets are typically processed, for example, cut or bent in order to form decorative materials such as decorative panels, they preferably have processability for withstanding these processes.

An example of such a decorative sheet that takes into consideration design properties (low gloss), scratch resistance, and stain resistance is disclosed in PTL 1.

[Citation List]

[Patent Literature]

[PTL 1] JP 2019-119138 A

[Summary of the Invention]

An object of the present invention is to provide a decorative sheet that provides a rough feel to the touch.

According to an aspect of the present invention, a decorative sheet is provided that includes a primary film layer, and a surface protective layer provided on one surface of the primary film layer. A surface of the surface protective layer has an uneven structure including a plurality of ridged portions protruding in a ridged shape, and the uneven structure of the surface protective layer has a reduced peak height Rpk of 3.5 $\mu$m or more.

Another aspect of the present invention provides the decorative sheet according to the above aspect, characterized in that the reduced peak height Rpk is 25 $\mu$m or less.

Another aspect of the present invention provides the decorative sheet according to any one of the above aspects, characterized in that the uneven structure of the surface protective layer has a mean width RSm of roughness profile elements of 150 $\mu$m or more.

Another aspect of the present invention provides the decorative sheet according to the above aspect, characterized in that the mean width RSm is 1000 $\mu$m or less.

Another aspect of the present invention provides the decorative sheet according to any one of the above aspects, characterized in that the surface protective layer has a thickness of 8 $\mu$m or more.

Another aspect of the present invention provides the decorative sheet according to any one of the above aspects, characterized in that the surface protective layer has a gloss of 10.0 or less.

Another aspect of the present invention provides the decorative sheet according to any one of the above aspects, characterized in that at least some of the ridge parts are adjacent to each other in a width direction, and, at a place where at least some of the ridge parts are adjacent to each other in the width direction, in a cross section parallel to the width direction and a thickness direction of the surface protective layer, a part with the uneven structure has a sine wave shape.

Another aspect of the present invention provides the decorative sheet according to any one of the above aspects, characterized in that the surface protective layer includes a cured product of an ionizing radiation curable resin.

Another aspect of the present invention provides the decorative sheet according to the above aspect, characterized in that the ionizing radiation curable resin is an acrylate whose main component has a repeating structure, the repeating structure is any one of ethylene oxide, propylene oxide, and ε-caprolactone, and a repeating number of the repeating structure is 3 or more.

Another aspect of the present invention provides a decorative material including the decorative sheet according to any one of the above aspects, and a substrate to which the decorative sheet is attached.

According to the present invention, a decorative sheet that provides a rough feel to the touch can be provided.

[Brief Description of the Drawings]

Fig. 1 is a cross-sectional view of a decorative material including a decorative sheet according to an embodiment of the present invention.

Fig. 2 is a cross-sectional view of a surface protective layer of the decorative sheet of Fig. 1.

Fig. 3 is a micrograph of the surface protective layer of a decorative sheet according to an example of the present invention.

[Description of the Embodiments]

With reference to the drawings, some embodiments of the present invention will be described. The embodiments described below are more specific examples of any of the aspects described above. The matters described below can be incorporated alone or in combination into each of the above aspects.

The embodiments described below are merely example configurations for embodying the technical idea of the present invention, and the technical idea of the present invention should not limit the materials, shapes, structures, and the like of the components to those described below. The technical idea of the present invention can undergo various modifications within the technical scope defined by the disclosed claims.

It should be noted that components having the same or similar functions are denoted by the same reference signs in the drawings referred to below, and redundant description is omitted. In addition, the drawings are schematic, and the relationship between dimensions in one direction and another direction, dimensions of a member and another member, and the like may be different from actual ones.

<1> Decorative material and decorative sheet

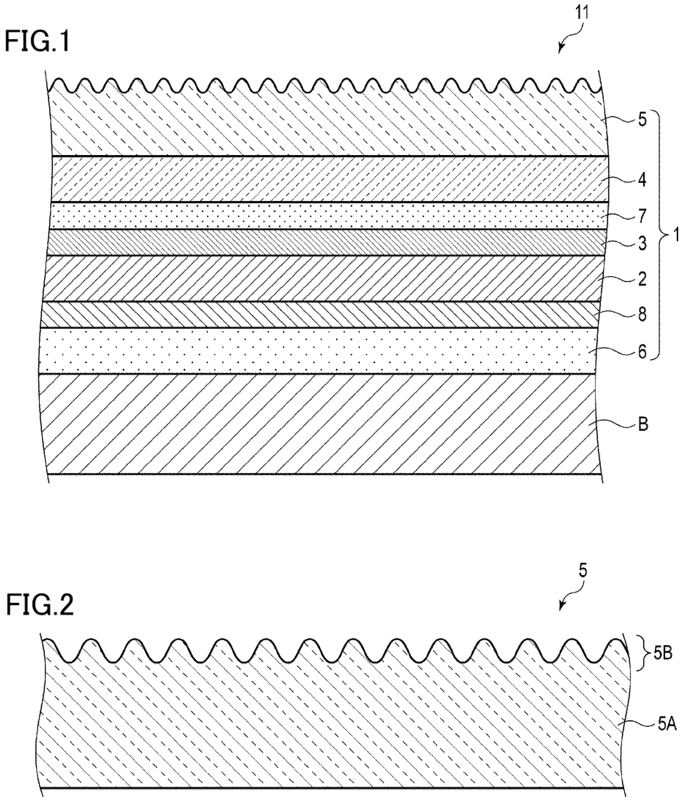

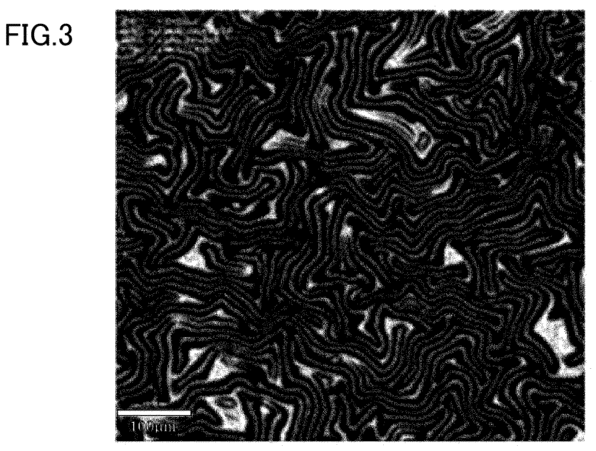

Fig. 1 is a cross-sectional view of a decorative material including a decorative sheet according to an embodiment of the present invention. Fig. 2 is a cross-sectional view of a surface protective layer of the decorative sheet of Fig. 1. Fig. 3 is a micrograph of the surface protective layer of a decorative sheet according to an example of the present invention.

Note that the cross section shown in Fig. 2 is taken along the thickness direction of the surface protective layer. The micrograph in Fig. 3 is a planar photograph taken with a laser microscope (OLS-4000, manufactured by Olympus Corporation).

A decorative material 11 shown in Fig. 1 includes a substrate B and a decorative sheet 1 attached thereto. Here, the decorative material 11 is a decorative panel. The decorative panel may be flat, bent, or folded. The decorative material 11 may have a shape other than a plate.

The substrate B is a board material. The board material is, for example, a wood board, an inorganic board, a metal plate, or a composite board made of multiple materials. The substrate B may have a shape other than a plate.

The decorative sheet 1 includes a primary film layer 2, a pattern layer 3, a transparent resin layer 4, a surface protective layer 5, an adhesive layer 7, a primer layer 6, and a concealing layer 8. The pattern layer 3, adhesive layer 7, transparent resin layer 4, and surface protective layer 5 are provided in this order from the primary film layer 2 side on the surface of the primer film layer 2 opposite to the surface facing the substrate B. The concealing layer 8 and the primer layer 5 are provided in this order from the primary film layer 2 side on the surface of the primary film layer 2 facing the substrate B. One or more of the pattern layer 3, the transparent resin layer 4, the primer layer 6, the adhesive layer 7, and the concealing layer 8 may be omitted. Components of the decorative sheet 1 will be explained below in order.

<1. 1> Primary film layer

The primary film layer 2 or its material may be, for example, selected from paper, synthetic resin, synthetic resin foam, rubber, nonwoven fabric, synthetic paper, metal foil, and the like. Examples of paper include tissue paper, titanium paper, and resin-impregnated paper. Examples of synthetic resins include polyethylene, polypropylene, polybutylene, polystyrene, polycarbonate, polyester, polyamide, ethylene-vinyl acetate copolymers, polyvinyl alcohol, and acrylic. Examples of rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. The nonwoven fabric may be organic or inorganic nonwoven fabric. The metal of the metal foil may be, for example, aluminum, iron, gold, or silver.

Taking into consideration printing workability, costs, and the like, the primary film layer 2 preferably has a layer thickness within the range of 20 $\mu$m or more and 250 $\mu$m or less.

<1. 2> Primer layer

When an olefin-based resin is used as the material of the primary film layer 2, the surface of the primary film layer 2 is inactivated in many cases. Therefore, if such cases, a primer layer 6 is preferably provided between the primary film layer 2 and the substrate B. When the primary film layer 2 is made of an olefin-based material, in order to omit the primer layer 6 and also to improve adhesion between the primary film layer 2 and the substrate B, the primary film layer 2 is preferably subjected to surface modification treatment such as corona treatment, plasma treatment, ozone treatment, electron beam treatment, ultraviolet ray treatment, or bichromate treatment, for example.

Examples of the material for the primer layer 6 include those for the pattern layer 3 which will be described later. Since the primer layer 6 is applied to the back surface of the decorative sheet 1, and taking into consideration that the decorative sheet 1 will be rolled up into a web, an inorganic filler may be added to the primer layer 6 to avoid blocking and to increase adhesion to the adhesive. Examples of inorganic fillers include silica, alumina, magnesia, titanium oxide, and barium sulfate.

<1. 3> Concealing layer

In order to impart the decorative sheet 1 with the ability to conceal the substrate B, for example, a colored sheet is used as the primary film layer 2, or an opaque concealing layer 8 is provided. Examples of the material for the concealing layer 8 include those for the pattern layer 3 which will be described later. However, since the concealing layer 8 is provided to conceal the substrate B, the pigment used is preferably an opaque pigment such as titanium oxide or iron oxide. Further, in order to improve concealing properties, a metal such as gold, silver, copper, or aluminum can be added to the material of the concealing layer 8. Typically, aluminum flakes are added.

<1. 4> Pattern layer

The pattern layer 3 is, for example, a layer obtained by printing a pattern on the primary film layer 2 using an ink. The ink binder may be, for example, one or a combination of two or more selected from nitrocellulose, cellulose, vinyl chloride-vinyl acetate copolymer, polyvinyl butyral, polyurethane, acrylic, polyester, and modified products thereof. The binder may be any of aqueous, solvent, and emulsion types, and may be a one-part type or a two-part type that uses a hardener. The pattern layer 3 may be formed by curing a curable ink layer by irradiating it with ultraviolet light, electron beams, or the like. Among these, the most typical method is the use of a urethane-based ink cured by isocyanate. The ink used to form the pattern layer 3 may further contain, in addition to the binder, any of various additives included in a typical ink, and examples include coloring agents such as pigments or dyes, extender pigments, and solvents. Examples of highly versatile pigments include condensed azo, insoluble azo, quinacridone, isoindoline, anthraquinone, imidazolone, cobalt, phthalocyanine, carbon, titanium oxide, iron oxide, pearl pigments of mica, and the like.

Moreover, besides the application of ink, vapor deposition or sputtering of various metals can be performed to apply a design to the pattern layer 3. In particular, it is preferable that a photostabilizer is added to the ink. This makes it possible to suppress deterioration of the decorative sheet 1 itself due to photodegradation of the ink, and extend the life of the decorative sheet 1.

<1. 5> Adhesive layer

The adhesive layer 7 is also called a heat-sensitive adhesive layer, an anchor coat layer, or an adhesive layer for dry lamination.

The resin material for the adhesive layer 7 is not specifically limited, and can be appropriately selected from, for example, resin materials such as acrylic, polyester, polyurethane, and epoxy-based adhesives. Another example of the resin material for the adhesive layer 7 is an ethylene-vinyl acetate copolymer resin adhesive. The coating method can be appropriately selected depending on the viscosity of the adhesive, or the like. Generally, gravure coating is used. After forming the adhesive layer 7 on the upper surface of the pattern layer 3 by gravure coating, the transparent resin layer 4 is laminated. The adhesive layer 7 may be omitted when the enough adhesiveness can be obtained between the transparent resin layer 4 and the pattern layer 3.

<1. 6> Transparent resin layer

Olefin-based resin is a suitable resin material for the transparent resin layer 4. Examples of the olefin-based resin include, besides polypropylene, polyethylene, polybutene, and the like, a homopolymer or a copolymer of one or more of $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), and a copolymer of ethylene or an $\alpha$-olefin with another monomer, for example, an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, ethylene-butyl acrylate copolymer, and the like.

Further, in order to improve the surface hardness of the decorative sheet 1, highly crystalline polypropylene is preferably used as the resin for the transparent resin layer 4. Note that, various additives such as thermal stabilizer, photostabilizer, anti-blocking agent, catalyst scavenger, coloring agent, light scattering agent, and luster adjusting agent may also be added to the transparent resin layer 4. Generally, a combination of a phenol-based, sulfur-based, phosphorus-based, hydrazine-based, or another heat stabilizer and a hindered amine-based or another photostabilizer is added.

<1. 7> Surface protective layer

The surface protective layer 5 includes a core part 5A and a plurality of ridge parts 5B protruding like ridges from one surface of the core part 5A. These ridge parts 5B form an uneven structure.

In the decorative sheet 1 according to the present embodiment, "ridges" refer to protrusions that are linear in plan view. The ridge parts 5B may be curved or straight in plan view, but from the standpoint of the fingerprint resistance of the decorative sheet 1, it is preferably curved. Each of the ridge parts 5B may or may not be branched in plan view. In the present disclosure, the ridge parts 5B refer to, for example, the section from the lowest part to the tip of the uneven shape provided on the surface of the surface protective layer 5, and the core part 5A refers to the section of the surface protective layer 5 excluding the ridge parts 5B.

For example, the ridge parts 5B are curved as shown in Fig. 3, and at least some of them are adjacent to each other in the width direction. At a place where at least some of the ridge parts 5B are adjacent to each other in the width direction, in a cross section of the surface protective layer 5 parallel to the width direction and the thickness direction of the surface protective layer 5, the part with the uneven structure has a wave shape, such as a sine wave shape, as shown in Fig. 2.

The uneven structure of the surface protective layer 5 has a reduced peak height Rpk of 3.5 $\mu$m or more. Here, "reduced peak height Rpk" is a surface texture parameter defined in JIS B 0671-2:2002. The reduced peak height Rpk is more preferably 4.5 $\mu$m or more, and further preferably 7.0 $\mu$m or more. When a user slides his or her skin, for example, his or her finger over the surface of the surface protective layer of a decorative sheet with a low reduced peak height Rpk, it does not give the user a rough feel to the touch.

The reduced peak height Rpk is preferably 25 $\mu$m or less, more preferably 20 $\mu$m or less, and even more preferably 15 $\mu$m or less. A decorative sheet having a high reduced peak height Rpk is difficult to manufacture with high reproducibility.

The uneven structure of the surface protective layer 5 preferably has a mean width RSm of roughness profile elements of 150 $\mu$m or more, more preferably 200 $\mu$m or more, and even more preferably 250 $\mu$m or more. Here, "mean width RSm of roughness profile elements" is a surface texture parameter defined in JIS B 0601:2013. To give the user a sensation of roughness when sliding skin, for example a finger, over the surface, for example, his or her finger over the surface of the surface protective layer, the mean width RSm of roughness profile elements preferably falls within the above range.

The mean width RSm is preferably 1000 $\mu$m or less, more preferably 900 $\mu$m or less, and even more preferably 800 $\mu$m or less. If the mean width RSm is increased, the user may perceive the presence of the ridge parts 5B less often when their skin slides over the surface of the surface protective layer. According to another example, the mean width RSm may be 600 $\mu$m or less, 550 $\mu$m or less, or 500 $\mu$m or less.

The thickness of the surface protective layer 5 is preferably 8 $\mu$m or more, more preferably 10 $\mu$m or more, and even more preferably 15 $\mu$m or more. If the thickness of the surface protective layer 5 is reduced, it becomes difficult to increase the reduced peak height Rpk and the mean width RSm. If the thickness of the surface protective layer 5 is increased, the reduced peak height Rpk and the mean width RSm tend to increase. Although the thickness of the surface protective layer 5 is not particularly limited, it is preferably 30 $\mu$m or less, and more preferably 25 $\mu$m or less for reasons such as reduced cost.

The thickness of the surface protective layer 5 is the thickness of a layer that has the same apparent area and volume as the surface protective layer 5 and has a flat surface. The thickness of the surface protective layer 5 is determined, for example, as follows. First, a cross section that is parallel to the thickness direction of the surface protective layer 5 and perpendicular to the length direction of the ridge parts 5B is imaged. Next, from this cross-sectional image, the dimension of the surface protective layer 5 in the width direction of the ridge parts 5B, and the area of the cross section of the surface protective layer 5 are obtained. The thickness of the surface protective layer 5 is a value obtained by dividing this area by this dimension.

If the coating liquid for the surface protective layer, which will be described later, does not contain a solvent, the thickness of the coating film made of the coating liquid for the surface protective layer is equal to the thickness of the surface protective layer 5.

The gloss of the surface protective layer 5 is preferably 10.0 or less and more preferably 8.0 or less. The "gloss" is a value measured at an incidence angle of 60° using a glossmeter, according to JIS Z 8741:1997.

<2> Method for producing decorative sheet

For example, the decorative sheet 1 is manufactured by the following method. For the sake of brevity, the pattern layer 3, transparent resin layer 4, primer layer 6, adhesive layer 7, and concealing layer 8 will not be explained here.

First, a coating film made of the coating liquid for the surface protective layer is formed on one surface of the primary film layer 2. This coating film can be formed by any of various printing methods, such as gravure printing, offset printing, screen printing, electrostatic printing, and inkjet printing, as well as various coating methods, such as roll coating, knife coating, microgravure coating, and die coating.

The coating liquid for the surface protective layer contains an ionizing radiation curable resin. Here, "ionizing radiation" refers to a charged particle beam such as an electron beam. The ionizing radiation curable resin is cured by exposure to ionizing radiation. The ionizing radiation curable resin can also be cured by exposure to ultraviolet light. The ionizing radiation curable resin used here is cured by exposure to light having a wavelength of 200 nm or less, and has a large absorption coefficient for this light.

In the coating liquid for the surface protective layer, when the total solid content is 100 parts by mass, the amount of the ionizing radiation curable resin is preferably 60 parts by mass or more, more preferably 70 parts by mass or more, and even more preferably 80 parts by mass or more. Possible ionizing radiation curable resins include known resins such as various monomers and commercially available oligomers. For example, (meth)acrylic resin, silicone resin, polyester resin, urethane resin, amide resin, or epoxy resin can be used. The ionizing radiation curable resin may be either an aqueous resin or a non-aqueous (organic solvent-based) resin.

A main component of the ionizing radiation curable resin is preferably acrylate. The main component of the ionizing radiation curable resin means 60 parts by mass or more when the total solid content of the ionizing radiation curable resin is 100 parts by mass. The ionizing radiation curable resin preferably contains 70 parts by mass or more of acrylate, and more preferably contains 80 parts by mass or more of acrylate.

The acrylate is preferably a di- or higher functional acrylate, and more preferably a tri- or higher functional acrylate. To obtain a surface protective layer 5 having good scratch resistance, the acrylate is preferably a tri- or higher functional acrylate. Although there is no upper limit to the number of functional groups of the acrylate, it is six or less according to one example.

The acrylate preferably has a repeating structure. This repeating structure is, for example, any one of an ethylene oxide (EO) structure, a propylene oxide (PO) structure, and an $\varepsilon$-caprolactone (CL) structure. The repeating structure is preferably ethylene oxide or propylene oxide. In tri- or higher functional acrylates having a repeating structure, the repeating structure may be present between the acryloyl group and the methylol group when the ring is open.

The repeating structure preferably has a repeating number of three or more. If an acrylate having a large repeating number is used, the cured film tends to expand in the in-plane direction in a first irradiation step described below. As a result, wrinkles corresponding to the ridge parts 5B are more likely to appear on the coating surface. However, if the repeating number is large, the crosslink density decreases, and the scratch resistance of the surface protective layer decreases.

A trifunctional acrylate having a repeating structure is, for example, EO-, PO-, or CL-modified trimethylolpropane triacrylate, glycerin triacrylate, isocyanurate triacrylate, or pentaerythritol triacrylate. In the case of a trifunctional acrylate having a repeating structure, the repeating number of the repeating structure is preferably 3 or more and 30 or less, and more preferably 3 or more and 20 or less.

A tetrafunctional acrylate having a repeating structure is, for example, EO-, PO-, or CL-modified pentaerythritol tetraacrylate. In the case of a tetrafunctional acrylate having a repeating structure, the repeating number of the repeating structure is preferably 12 or more, more preferably 12 or more and 50 or less, and even more preferably 20 or more and 50 or less.

The repeating number of the repeating structure can be analyzed by using MALDI-TOF-MS. The ionizing radiation curable resin may have a molecular weight distribution. When it has a molecular weight distribution, the above-described repeating number corresponds to the molecular weight having the most intense peak in the mass spectrum of MALDI-TOF-MS.

The coating liquid for the surface protective layer preferably further contains particles. When particles are contained in the coating liquid for the surface protective layer, wrinkles can be more uniformly formed on the coating surface in the first irradiation step.

Examples of the particles include particles of organic materials such as polyethylene (PE) wax, polypropylene (PP) wax, and resin beads, and particles of inorganic materials such as silica, glass, alumina, titania, zirconia, calcium carbonate, and barium sulfate.

The average size (D50) of the particles is preferably 10 $\mu$m or less. It is more preferred that the average size (D50) of the particles is within a range of from 1 $\mu$m to 8 $\mu$m, even more preferably from 2 $\mu$m to 6 $\mu$m. If large particles are used, the particles are likely to fall off from the surface protective layer 5, which may make it difficult to achieve high scratch resistance. If small particles are used, the effect of forming the wrinkles uniformly may decrease.

Here, the "average size (D50)" is a median diameter (D50) measured by a laser diffraction/scattering particle size analyzer. When the coating liquid for the surface protective layer contains particles, the surface protective layer 5 obtained from this coating liquid also contains particles. The average size of the particles contained in the surface protective layer 5 can be determined by observing a cross section thereof and averaging the particle sizes of a plurality of particles. The value thus obtained is substantially the same as the median diameter (D50) measured by a laser diffraction/scattering particle size analyzer. Therefore, the above range of average size can also be read as the range of average size of the particles contained in the surface protective layer 5.

Based on 100 parts by mass of the ionizing radiation curable resin, the amount of particles added is preferably 0.5 parts by mass or more and 10 parts by mass or less, more preferably 2 parts by mass or more and 8 parts by mass or less, and further preferably 2 parts by mass or more and 6 parts by mass or less. When the amount of particles falls within the above range, the effect of forming wrinkles uniformly is particularly large.

The coating liquid for the surface protective layer may further contain a solvent or one or more additives for improving the functionality of the final product, such as an antibacterial agent and an antifungal agent. The coating liquid for the surface protective layer may further contain another additive such as an ultraviolet absorber or a photostabilizer. Examples of ultraviolet absorbers include benzotriazole-based ultraviolet absorbers, benzoate-based ultraviolet absorbers, benzophenone-based ultraviolet absorbers, and triazine-based ultraviolet absorbers. Examples of photostabilizers include hindered amine-based photostabilizers. Note that, according to a method described herein, a surface protective layer 5 having a low gloss can be formed without using a gloss adjuster (matting additive.

In a second irradiation step described below, if the entire coating film made of the coating liquid for the surface protective layer is to be cured by exposure to ultraviolet light, it is preferable that the coating liquid for the surface protective layer further contains a photoinitiator. The photoinitiator is not particularly limited, but examples thereof include benzophenone-based, acetophenone-based, benzoin ether-based, and thioxanthone-based photoinitiators.

After forming the coating film made of the coating liquid for the surface protective layer, the first irradiation step is carried out. In the first irradiation step, the coating film is irradiated with light having a wavelength of 200 nm or less (hereinafter referred to as first irradiation light). The ionizing radiation curable resin contained in the coating liquid for the surface protective layer has a large absorption coefficient for the first irradiation light. Therefore, the first irradiation light incident on the coating film can only reach several tens to several hundreds of nm beneath the outermost surface of the coating film. Therefore, in the first irradiation step, the crosslinking reaction proceeds in the surface region of the coating film to form an extremely thin cured film, while in the other regions the crosslinking reaction does not proceed and the other regions remain uncured.

The coating film after the first irradiation step has wrinkles on its surface corresponding to the ridge parts 5B. The present inventors consider that a reason why wrinkles are formed on the coating surface in the first irradiation step is as follows.

As described above, the first irradiation light incident on the coating film can only reach several tens to several hundreds of nm beneath the outermost surface of the coating film. That is, the crosslinking reaction of the ionizing radiation curable resin occurs only on the surface of the coating film. Monomers and the like on the surface of the coating film form a cured film by crosslinking via their functional groups when irradiated with the first irradiation light, but not all of these functional groups are used for crosslinking between the monomers on the surface of the coating film. That is, uncrosslinked functional groups may remain in the cured film.

Since the first irradiation light does not reach monomers present at locations away from the surface of the coating film, the crosslinking reaction does not occur. However, some of the monomers located away from the surface of the coating film migrates into the cured film and undergoes a crosslinking reaction. In this way, the number of molecules involved in the crosslinking reaction increases.

The larger the number of molecules involved in the crosslinking reaction at the coating surface, the larger the volume of the cured film. Since the crosslinking reaction occurs only at the surface of the coating film, the cured film cannot increase its volume in the thickness direction, but expands in the in-plane direction. As a result, wrinkles are formed on the surface of the coating film.

The first irradiation light can be extracted from excimer vacuum ultra violet (VUV) light. Excimer VUV light can be produced from lamps using noble gases or noble gas halide compounds. When electrons having high energy are externally applied to a lamp in which a noble gas or a noble gas halide compound gas is contained, a large amount of discharge plasma (dielectric barrier discharge) is generated. This plasma discharge excites the discharge gas (noble gas) atoms and momentarily turns them into an excimer state. When returning from this excimer state to the ground state, light is emitted in a wavelength region specific to that excimer.

The gas used in the excimer lamp may be any conventional gas that emits light of 200 nm or less. The gas can be a noble gas such as Xe, Ar, or Kr, or a mixed gas of a noble gas and a halogen gas such as ArBr or ArF. Excimer lamps have different wavelengths (center wavelengths) depending on the gas, such as approximately 172 nm (Xe), approximately 126 nm (Ar), approximately 146 nm (Kr), approximately 165 nm (ArBr), and approximately 193 nm (ArF).

Considering the magnitude of photon energy and the difference between wavelength and bond energy of organic matter, it is preferable to use a xenon lamp that emits excimer light with a central wavelength of 172 nm as the light source. A xenon lamp is preferable as the light source also in consideration of the cost of equipment maintenance, availability of materials, and the like.

The first irradiation step is performed in an atmosphere having a low oxygen concentration. Oxygen has a large absorption coefficient for light at 200 nm or less. Therefore, the first irradiation step is preferably performed, for example, in a nitrogen gas atmosphere. The oxygen concentration in the gas phase in the first irradiation step, that is, the residual oxygen concentration in the reaction atmosphere, is preferably 2000 ppm or less, and more preferably 1000 ppm or less.

The oxygen in the atmosphere inhibits radical polymerization. Therefore, the residual oxygen concentration in the reaction atmosphere affects the formation of wrinkles on the coating surface. Therefore, when the residual oxygen concentration in the reaction atmosphere is changed, the surface properties of the surface protective layer 5 may also change.

The integrated light intensity of the first irradiation light is preferably 0.5 mJ/cm$^2$ or more and 200 mJ/cm$^2$ or less, more preferably 1 mJ/cm$^2$ or more and 100 mJ/cm$^2$ or less, and even more preferably 3 mJ/cm$^2$ or more and 50 mJ/cm$^2$ or less. If the integrated light intensity is reduced, the expansion of the cured film in the in-plane direction decreases. If the integrated light intensity is increased, the surface condition of the coating film deteriorates.

The second irradiation step is carried out after the first irradiation step is finished. In the second irradiation step, the coating film is irradiated with a second radiation or irradiation light to cure the entire coating film. Thus, the surface protective layer 5 is obtained.

The second radiation or irradiation light is ionizing radiation such as an electron beam, or ultraviolet light having a longer wavelength than the first irradiation light.

When the second radiation or irradiation light is ultraviolet light, the integrated light intensity of the second irradiation light is preferably 10 mJ/cm$^2$ or more and 500 mJ/cm$^2$ or less, more preferably 50 mJ/cm$^2$ or more and 400 mJ/cm$^2$ or less, and even more preferably 100 mJ/cm$^2$ or more and 300 mJ/cm$^2$ or less.

For example, the decorative sheet 1 can be manufactured by the above method. The decorative sheet 1 may also be manufactured by another method. For example, a plate may be formed using the method described above for the surface protective layer 5, and the surface protective layer 5 having the uneven structure on its surface may be formed by transfer using this plate.

<3> Effects

The surface protective layer 5 of the decorative sheet 1 described with reference to Figs. 1 to 3 has the above-described surface properties. When a user their skin, for example a finger over the surface of the surface protective layer 5 of such a decorative sheet 1, it gives the user a rough sensation. In other words, this decorative sheet 1 allows the user to sense the presence of large protrusions and recesses.

The decorative sheet 1, which gives the user a rough feel to the touch, is suitable for use when it often comes into contact with the user's skin often, and the article whose appearance is to be reproduced with the decorative sheet 1 has a rough sensation. Specifically, the decorative sheet 1 is suitable for use with furniture and the like.

Since the surface protective layer 5 of the decorative sheet 1 has the above-described surface properties, it can achieve a low gloss even when it does not contain a matting agent (matting additive). Since a gloss adjuster reduces the oil repellency of the layer formed of the resin material, a surface protective layer containing a matting agent is easily stained with fingerprints. A surface protective layer 5 containing no gloss adjuster is less likely to absorb oil, and therefore fingerprints are less likely to remain. In addition, a surface protective layer 5 having good oil repellency is less likely to be stained with oil or to adsorb contaminants. Furthermore, when the surface of the surface protective layer 5 that does not contain a matting agent is scratched, gloss adjuster particles do not become detached. This allows the decorative sheet 1 that includes such a surface protective layer 5 to be less likely to suffer from gloss changes or scratches.

A reason why the surface protective layer 5 having the above surface properties can be obtained by the above method is as follows.

Oxygen in the gas phase not only absorbs short-wavelength ultraviolet light, but also inhibits radical polymerization. The effect of oxygen in the gas phase on radical polymerization is greatest in the part of the coating film made of ionizing radiation curable resin adjacent to the gas phase, and decreases as it gets further from the coating film surface. Therefore, by changing the oxygen concentration in the gas phase in the first irradiation step, the relationship between the distance from the coating surface and the progress of the crosslinking reaction can be changed.

Changes in this relationship in turn change the thickness of the cured film formed on the surface of the coating film by the first irradiation step, and the degree of expansion of the cured film in the in-plane direction according to the progress of the crosslinking reaction. The thickness of the cured film and the degree of expansion of the cured film in the in-plane direction are also affected by the integrated light intensity in the first irradiation step. The thickness of the cured film and the degree of expansion of the cured film in the in-plane direction affect the surface properties of the surface protective layer. In addition, the thickness of the coating film also affects the formation of wrinkles.

Therefore, for example, by appropriately setting the composition of the ionizing radiation curable resin, the thickness of the coating film, the oxygen concentration in the gas phase in the first irradiation step, and the integrated light intensity in the first irradiation step, it is possible to obtain a surface protective layer having desired surface properties.

Examples

The following description discusses examples of the present invention.

<Example 1>

The decorative sheet 1 described with reference to Figs. 1 to 3 was produced by as follows. In this example, the transparent resin layer 4, the primer layer 6, the adhesive layer 7, and the concealing layer 8 were omitted.

First, impregnated paper having a basis weight of 50 g/m$^2$ (GFR-506, manufactured by Kohjin Co., Ltd.) was prepared as the primary film layer 2. On one surface of the primary film layer 2, the pattern layer 3 was formed using oil-based nitrocellulose resin gravure printing inks (various colors of PCNT (PCRNT) manufactured by Toyo Ink Co., Ltd.).

After that, the coating liquid for the surface protective layer was applied onto the pattern layer 3. The coating liquid for the surface protective layer was prepared by mixing the following ionizing radiation curable resin with the following particles.

- Ionizing radiation curable resin

Type: Ethylene glycol diacrylate (9 moles of EO added)

Product name: Light Acrylate 9EG-A (Kyoeisha Chemical Co., Ltd.)

Compounding amount: 100 parts by mass

- Particles

Product name: SYLYSIA 250N (manufactured by Fuji Silysia Chemical Ltd.)

Particle size: 5 $\mu$m

Compounding amount: 0.5 parts by mass

The coating film was formed with the coating liquid for the surface protective layer so that it has a thickness of 10 μm.

The first irradiation step was then carried out. Specifically, under atmospheric pressure and in a nitrogen gas atmosphere with an oxygen concentration of 500 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$. This created wrinkles on the surface of the coating film.

Subsequently, the second irradiation step was carried out. Specifically, the coating film was irradiated with ionizing radiation to cured it entirely and form the surface protective layer 5.

In this manner, the decorative sheet 1 was obtained.

<Example 2>

The decorative sheet 1 was produced in the same manner as in Example 1 except for the following point. That is, in this example, the following ionizing radiation curable resin was used.

- Ionizing radiation curable resin

Type: Trimethylolpropane EO-modified triacrylate (6 moles of EO added)

Product name: Miramer M3160 (manufactured by Miwon)

In the first irradiation step, under atmospheric pressure and in a nitrogen gas atmosphere with an oxygen concentration of 500 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 3>

The decorative sheet 1 was produced in the same manner as in Example 1 except for the following point. That is, in this example, the following ionizing radiation curable resin was used.

- Ionizing radiation curable resin

Type: Trimethylolpropane EO-modified triacrylate (15 moles of EO added)

Product name: SR9035 (manufactured by Sartomer)

In the first irradiation step, under atmospheric pressure and in a nitrogen gas atmosphere with an oxygen concentration of 500 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 4>

The decorative sheet 1 was produced in the same manner as in Example 1 except for the following point. That is, in this example, the following ionizing radiation curable resin was used.

- Ionizing radiation curable resin

Type: Trimethylolpropane EO-modified triacrylate (3 moles of EO added)

Product name: Miramer M3130 (manufactured by Miwon)

In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 5>

The decorative sheet 1 was produced in the same manner as in Example 1 except for the following point. That is, in this example, the following ionizing radiation curable resin was used.

- Ionizing radiation curable resin

Type: Trimethylolpropane PO-modified triacrylate (6 moles of PO added)

Product name: NK Ester A-TMPT-6PO (manufactured by SHIN-NAKAMURA CHEMICAL Co., Ltd.)

In the first irradiation step, under atmospheric pressure and in a nitrogen gas atmosphere with an oxygen concentration of 500 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 6>

The decorative sheet 1 was produced in the same manner as in Example 1 except for the following point. That is, in this example, the following ionizing radiation curable resin was used.

- Ionizing radiation curable resin

Type: Caprolactone-modified tris-(2-acryloxyethyl)isocyanurate (3 moles of caprolactone (CL) added)

Product name: NK Ester A-9300-3CL (manufactured by SHIN-NAKAMURA CHEMICAL Co., Ltd.)

In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 7>

The decorative sheet 1 was produced in the same manner as in Example 1 except for the following point. That is, in this example, the following ionizing radiation curable resin was used. The coating film was formed with the coating liquid for the surface protective layer so that it had a thickness of 8 $\mu$m.

- Ionizing radiation curable resin

Type: Trimethylolpropane EO-modified triacrylate (6 moles of EO added)

Product name: Miramer M3160 (manufactured by Miwon)

In the first irradiation step, under atmospheric pressure and in a nitrogen gas atmosphere with an oxygen concentration of 500 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 8>

The decorative sheet 1 was produced in the same manner as in Example 1 except for the following point. That is, in this example, the following ionizing radiation curable resin was used. The coating film was formed with the coating liquid for the surface protective layer so that it had a thickness of 15 μm.

- Ionizing radiation curable resin

Type: Trimethylolpropane EO-modified triacrylate (6 moles of EO added)

Product name: Miramer M3160 (manufactured by Miwon)

In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 9>

The decorative sheet 1 was produced in the same manner as in Example 1 except for the following point. That is, in this example, the following ionizing radiation curable resin was used.

- Ionizing radiation curable resin

Type: Ethoxylated pentaerythritol tetraacrylate (35 moles of EO added)

Product name: NK Ester ATM-35E (manufactured by SHIN-NAKAMURA CHEMICAL Co., Ltd.)

In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 10>

The decorative sheet 1 was produced in the same manner as in Example 1 except for the following point. That is, in this example, the following ionizing radiation curable resin was used.

- Ionizing radiation curable resin

Type: Ethoxylated pentaerythritol tetraacrylate (50 moles of EO added)
In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 11>

The decorative sheet 1 was produced in the same manner as in Example 1 except for the following point. That is, in this example, the following ionizing radiation curable resin was used.

- Ionizing radiation curable resin

Type: Ethoxylated pentaerythritol tetraacrylate (20 moles of EO added)

In the first irradiation step, under atmospheric pressure and in a nitrogen gas atmosphere with an oxygen concentration of 100 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 12>

The decorative sheet 1 was produced in the same manner as in Example 1 except for the following point. That is, in this example, the following ionizing radiation curable resin was used.

- Ionizing radiation curable resin

Type: Propoxylated pentaerythritol tetraacrylate (35 moles of PO added)
In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 13>

The decorative sheet 1 was produced in the same manner as in Example 1 except for the following point. That is, in this example, the following ionizing radiation curable resin was used.

- Ionizing radiation curable resin

Type: Caprolactone-modified pentaerythritol tetraacrylate (20 moles of CL added)
In the first irradiation step, under atmospheric pressure and in a nitrogen gas atmosphere with an oxygen concentration of 100 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 14>

The decorative sheet 1 was produced in the same manner as in Example 1 except for the following point. That is, in this example, the following ionizing radiation curable resin was used. The coating film was formed with the coating liquid for the surface protective layer so that it had a thickness of 8 $\mu$m.

- Ionizing radiation curable resin

Type: Ethoxylated pentaerythritol tetraacrylate (35 moles of EO added)

Product name: NK Ester ATM-35E (manufactured by SHIN-NAKAMURA CHEMICAL Co., Ltd.)

In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Example 15>

The decorative sheet 1 was produced in the same manner as in Example 1 except for the following point. That is, in this example, the following ionizing radiation curable resin was used. The coating film was formed with the coating liquid for the surface protective layer so that it had a thickness of 15 $\mu$m.

- Ionizing radiation curable resin

Type: Ethoxylated pentaerythritol tetraacrylate (35 moles of EO added)
In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 16>

The decorative sheet 1 was produced in the same manner as in Example 1 except for the following point. That is, in this example, the following ionizing radiation curable resin was used.

- Ionizing radiation curable resin

Type: Ethoxylated dipentaerythritol hexaacrylate (12 moles of EO added)
In the first irradiation step, under atmospheric pressure and in a nitrogen gas atmosphere with an oxygen concentration of 100 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 17>

The decorative sheet 1 was produced in the same manner as in Example 1 except for the following point. That is, in this example, the following ionizing radiation curable resin was used.

- Ionizing radiation curable resin

Type: Ethoxylated pentaerythritol tetraacrylate (20 moles of EO added)
In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 200 mJ/cm$^2$.

<Example 18>

The decorative sheet 1 was produced in the same manner as in Example 1 except for the following point. That is, in this example, the following ionizing radiation curable resin was used. The coating film was formed with the coating liquid for the surface protective layer so that it had a thickness of 8 μm.
Type: Ethoxylated pentaerythritol tetraacrylate (20 moles of EO added)
In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 150 mJ/cm$^2$.

<Comparative Example 1>

The decorative sheet was produced in the same manner as in Example 1 except for the following points. That is, in this example, the coating liquid for the surface protective layer was prepared by mixing the following ionizing radiation curable resin with the following particles.

- Ionizing radiation curable resin

Type: Trimethylolpropane EO-modified triacrylate (6 moles of EO added)

Product name: Miramer M3160 (manufactured by Miwon)

Compounding amount: 100 parts by mass

- Particles

Product name: SYLYSIA 250N (manufactured by Fuji Silysia Chemical Ltd.)

Particle size: 5 μm

Compounding amount: 15 parts by mass

The first irradiation step was not carried out, and the coating film made of the coating liquid for the surface protective layer was cured only by the second irradiation step.

<Comparative Example 2>

The decorative sheet was produced in the same manner as in Example 1 except for the following points. That is, in this example, the coating liquid for the surface protective layer was prepared by mixing the following ionizing radiation curable resin with the following particles.

- Ionizing radiation curable resin

Type: Ethoxylated pentaerythritol tetraacrylate (35 moles of EO added)

Product name: NK Ester ATM-35E (manufactured by SHIN-NAKAMURA CHEMICAL Co., Ltd.)

Compounding amount: 100 parts by mass

- Particles

Product name: SYLYSIA 250N (manufactured by Fuji Silysia Chemical Ltd.)

Particle size: 5 μm

Compounding amount: 15 parts by mass

The first irradiation step was not carried out, and the coating film made of the coating liquid for the surface protective layer was cured only by the second irradiation step.

<Comparative Example 3>

The decorative sheet was produced in the same manner as in Example 1 except for the following points. That is, in this example, the following ionizing radiation curable resin was used. The coating film was formed with the coating liquid for the surface protective layer so that it had a thickness of 5 μm.

- Ionizing radiation curable resin

Type: Trimethylolpropane EO-modified triacrylate (6 moles of EO added)

Product name: Miramer M3160 (manufactured by Miwon)

In the first irradiation step, under atmospheric pressure and in a nitrogen gas atmosphere with an oxygen concentration of 500 ppm, the surface of the coating film made of the coating liquid for the surface protective layer was irradiated with ultraviolet light having a wavelength of 172 nm using a Xe excimer lamp so that the integrated light intensity would be 50 mJ/cm$^2$.

<Comparative Example 4>

The decorative sheet was produced in the same manner as in Example 1 except for the following points. That is, in this example, the following ionizing radiation curable resin was used. The coating film was formed with the coating liquid for the surface protective layer so that it had a thickness of 5 μm.

- Ionizing radiation curable resin

Type: Ethoxylated pentaerythritol tetraacrylate (35 moles of EO added)

Product name: NK Ester ATM-35E (manufactured by SHIN-NAKAMURA CHEMICAL Co., Ltd.)

In the first irradiation step, under atmospheric pressure and in a nitrogen gas atmosphere with an oxygen concentration of 200 ppm, the surface of the coating film made of the coating liquid for the surface protective layer was irradiated with ultraviolet light having a wavelength of 172 nm using a Xe excimer lamp so that the integrated light intensity would be 50 mJ/cm$^2$.

<Evaluation>

Each of the above decorative sheets was evaluated as follows.

(1) Gloss

Gloss was measured by measuring 60° gloss using Rhopoint IQ (manufactured by KONICA MINOLTA, INC.). The "60° gloss value" in the following Tables 1 to 3 represents this 60° gloss.

(2) Skin feel

The skin feel (sensation of roughness) was evaluated as following follows.
First, advance preparation was carried out to so that the evaluators use the same evaluation criteria. Specifically, ten standard test samples with different surface properties were prepared. Each of the 20 evaluators was asked to run a finger over the surface of each standard test sample while blindfolded, and then to classify the sensation into one of the following five groups.
Group 1: The presence of protrusions and recesses was clearly felt, and there was a strong rough sensation

Group 2: There was a rough sensation (roughness between those of Groups 1 and 3).

Group 3: Slight rough sensation.

Group 4: No rough sensation.

This was repeated until the evaluations provided by the same evaluator match three or more times in a row for each evaluator, and the evaluation results from the evaluators match three times in a row.
After that, for each of the decorative sheets, each of the evaluators ran a finger over the surface of the surface protective layer while blindfolded, and classified the sensation into one of the above five groups. This was repeated until the evaluations provided by the same evaluator match three or more times in a row for each evaluator, and the evaluation results from the evaluators match three times in a row. The skin sensation was rated according to the following criteria based on the obtained results.

AAA: Group 1

AA: Group 2

A: Group 3

B: Group 4.

(3) Fingerprint resistance

Fingerprint wipability was evaluated for evaluation of fingerprint resistance.
Specifically, first, the 60° gloss of the surface of each decorative sheet was measured, and this 60° gloss was taken as the initial gloss. Next, a liquid for evaluating fingerprint resistance was applied to the surface protective layer, and the liquid applied to the surface of the decorative sheet was wiped off. A higher fatty acid was used as the liquid for evaluating fingerprint resistance. After that, the 60° gloss of the part from which the liquid for evaluating fingerprint resistance had been wiped off was measured, and this 60° gloss was taken as the gloss after wiping.
A fingerprint removal rate was calculated using the following formula.

$$\text{Fingerprint removal rate (\%)} = (\text{Gloss after wiping/Initial gloss}) \times 100$$

The evaluation criteria were as follows.
AA: 70% or more and less than 250%

A: 50% or more and less than 70%, or 250% or more and less than 300%

B: Less than 50% or more than 300%.

(4) Stain resistance

To evaluate the stain resistance, the Contaminant A test specified in the Japanese Agricultural Standards (JAS) was carried out. That is, a line having a width of 10 mm was drawn on the surface protective layer of each decorative sheet using blue ink, black quick-drying ink and red crayon, and the sheets were left to stand for 4 hours. Then, the lines drawn with the blue ink, black quick-drying ink, and red crayon were wiped off with a cloth wetted with ethanol.
The evaluation criteria were as follows.

AA: The colored lines could be easily wiped off.

A: The colored lines could be partially wiped off, but some stains remained.

B: The colored lines could not be wiped off.

(5) Scratch resistance test

The decorative sheets were each attached to a wood substrate B using a urethane adhesive. After that, a steel wool rubbing test was carried out to evaluate scratch resistance. Specifically, the decorative sheet was reciprocated 20 times with steel wool while applying a load of 100 g, and the formation of scratches on the surface of the decorative sheet and changes in gloss was visually examined.
The evaluation criteria were as follows.

AA: No scratches or changes in gloss occurred on the surface.
A: Slight scratches or changes in gloss occurred on the surface.
B: Significant scratches or changes in gloss occurred on the surface.

[Table 1]

| | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Surface shape | | | Ridged | Ridged | Ridged | Ridged | Ridged | Ridged | Ridged | Ridged |
| Reduced peak height | | Rpk ($\mu$m) | 4.6 | 4.5 | 4.8 | 3.9 | 4.6 | 4.0 | 3.6 | 7.5 |
| Roughness profile element | | RSm ($\mu$m) | 286.5 | 312.6 | 176.8 | 387.5 | 248.6 | 401.8 | 271.8 | 386.7 |
| Thickness ($\mu$m) | | | 10 | 10 | 10 | 10 | 10 | 10 | 8 | 15 |
| Acrylic resin | No. of functional groups | | 2 | 3 | 3 | 3 | 3 | 3 | 3 | 3 |
| | Repeating structure | Structure | $C_2H_4O$ | $C_2H_4O$ | $C_2H_4O$ | $C_2H_4O$ | $C_3H_6O$ | $C_6H_{10}O_2$ | $C_2H_4O$ | $C_2H_4O$ |
| | | Repeating No. | 9 | 6 | 15 | 3 | 6 | 3 | 6 | 6 |
| 60° gloss value | | | 2.8 | 2.5 | 1.8 | 3.9 | 2.6 | 4.1 | 2.9 | 2.2 |
| Skin feel | Rough | | AA | AA | AA | AA | AA | AA | A | AAA |
| Fingerprint resistance | | | AA | AA | AA | AA | AA | AA | AA | AA |
| Stain resistance | Stain A | | AA | AA | AA | AA | AA | AA | AA | AA |
| Scratch resistance | Steel | | B | AA | AA | AA | AA | AA | AA | AA |

[Table 2]

| | | | Ex. 9 | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|---|---|---|
| Surface shape | | | Ridged | Ridged | Ridged | Ridged | Ridged | Ridged | Ridged | Ridged | Ridged | Ridged |
| Reduced peak height | Rpk ($\mu$m) | | 4.5 | 4.8 | 3.7 | 4.5 | 3.9 | 3.5 | 7.3 | 3.5 | 3.9 | 3.6 |
| Roughness profile element | RSm ($\mu$m) | | 321.4 | 186.5 | 386.7 | 287.9 | 396.2 | 275.8 | 398.5 | 487.5 | 982.3 | 1018.5 |
| Thickness ($\mu$m) | | | 10 | 10 | 10 | 10 | 10 | 8 | 15 | 10 | 10 | 8 |
| Acrylic resin | No. of functional groups | | 4 | 4 | 4 | 4 | 4 | 4 | 4 | 6 | 4 | 4 |
| | Repeating structure | Structure | $C_2H_4O$ | $C_2H_4O$ | $C_2H_4O$ | $C_3H_6O$ | $C_6H_{10}O_2$ | $C_2H_4O$ | $C_2H_4O$ | $C_2H_4O$ | $C_2H_4O$ | $C_2H_4O$ |
| | | Repeating No. | 35 | 50 | 20 | 35 | 20 | 35 | 35 | 12 | 20 | 20 |
| 60° gloss value | | | 2.5 | 1.7 | 4.0 | 2.6 | 4.3 | 3.0 | 2.3 | 6.6 | 8.0 | 9.2 |
| Skin feel | Rough | | AA | AA | AA | AA | AA | A | AAA | AA | AA | A |
| Fingerprint resistance | | | AA | AA | AA | AA | AA | AA | AA | AA | AA | AA |
| Stain resistance | Stain A | | AA | AA | AA | AA | AA | AA | AA | AA | AA | AA |
| Scratch resistance | Steel | | AA | AA | AA | AA | AA | AA | AA | AA | AA | AA |

[Table 3]

| | | | Comp. Ex. 1 | Comp. Ex. 2 | Comp. Ex. 3 | Comp. Ex. 4 |
|---|---|---|---|---|---|---|
| Surface shape | | | Uneven due to particles | Uneven due to particles | Ridged | Ridged |
| Reduced peak height | Rpk ($\mu$m) | | 0.5 | 0.5 | 2.9 | 2.8 |
| Roughness profile element | RSm ($\mu$m) | | 1102.8 | 1058.6 | 311.5 | 308.5 |
| Thickness ($\mu$m) | | | 10 | 10 | 5 | 5 |
| Acrylic resin | No. of functional groups | | 3 | 4 | 3 | 4 |
| | Repeating structure | Structure | $C_2H_4O$ | $C_2H_4O$ | $C_2H_4O$ | $C_2H_4O$ |
| | | Repeating No. | 6 | 35 | 6 | 35 |
| 60° gloss value | | | 10.0 | 10.0 | 3.0 | 2.8 |
| Skin feel | Rough | | B | B | B | B |
| Fingerprint resistance | | | B | B | AA | AA |
| Stain resistance | Stain A | | B | B | AA | AA |
| Scratch resistance | Steel | | B | B | AA | AA |

As shown in Tables 1 and 2, the decorative sheets according to Examples 1 to 16 gave the evaluators a rough sensation. The decorative sheets according to Examples 1 to 16 had low gloss, and good fingerprint resistance and stain resistance. Further, the decorative sheets according to Examples 2 to 16 also had good scratch resistance. In contrast, the decorative sheets according to Comparative Examples 1 and 2, as shown in Table 3, did not give the evaluators a rough sensation, and were inferior in fingerprint resistance, stain resistance, and scratch resistance. The decorative sheets according to Comparative Examples 3 and 4 had low gloss and good fingerprint resistance, stain resistance, and scratch resistance, but did not give the evaluators a rough sensation.

[Reference Signs List]

1     Decorative sheet

2     Primary film layer

3     Pattern layer

4     Transparent resin layer

5     Surface protective layer

6     Primer layer

7     Adhesive layer

8     Concealing layer

11    Decorative material

B     Substrate

**Claims**

1. A decorative sheet comprising a primary film layer, and a surface protective layer provided on one surface of the primary film layer, wherein

   a surface of the surface protective layer has an uneven structure including a plurality of ridged portions protruding in a ridged shape, and
   the uneven structure of the surface protective layer has a reduced peak height Rpk of 3.5 $\mu$m or more.

2. The decorative sheet according to claim 1, wherein the reduced peak height Rpk is 25 $\mu$m or less.

3. The decorative sheet according to claim 1 or 2, wherein the uneven structure of the surface protective layer has a mean width RSm of roughness profile elements of 150 $\mu$m or more.

4. The decorative sheet according to claim 3, wherein the mean width RSm is 1000 $\mu$m or less.

5. The decorative sheet according to any one of claims 1 to 4, wherein the surface protective layer has a thickness of 8 $\mu$m or more.

6. The decorative sheet according to any one of claims 1 to 5, wherein the surface protective layer has a gloss of 10.0 or less.

7. The decorative sheet according to any one of claims 1 to 6, wherein at least some of the ridge parts are adjacent to each other in a width direction, and, at a place where at least some of the ridge parts are adjacent to each other in the width direction, in a cross section parallel to the width direction and a thickness direction of the surface protective layer, a part with the uneven structure has a sine wave shape.

8. The decorative sheet according to any one of claims 1 to 7, **characterized in that** the surface protective layer includes a cured product of an ionizing radiation curable resin.

9. The decorative sheet according to claim 8, **characterized in that** the ionizing radiation curable resin is an acrylate whose main component has a repeating structure,

   the repeating structure is any one of ethylene oxide, propylene oxide, and $\varepsilon$-caprolactone, and
   a repeating number of the repeating structure is 3 or more.

10. A decorative material comprising the decorative sheet according to any one of claims 1 to 9, and a substrate to which the decorative sheet is attached.

FIG.1

FIG.2

FIG.3

**EP 4 545 295 A1**

**INTERNATIONAL SEARCH REPORT**

| International application No. |
|---|
| **PCT/JP2023/023147** |

**A. CLASSIFICATION OF SUBJECT MATTER**

**B32B 27/00**(2006.01)i; **E04F 15/02**(2006.01)i
FI: B32B27/00 E; E04F15/02 C

According to International Patent Classification (IPC) or to both national classification and IPC

**B. FIELDS SEARCHED**

Minimum documentation searched (classification system followed by classification symbols)

B32B27/00; B32B27/30; E04F13/00; E04F13/07; E04F15/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2020-0059905 A (LG HAUSYS, LTD.) 29 May 2020 (2020-05-29) | 1-8, 10 |
| | claims, paragraphs [0001]-[0177], fig. 1-3 | |
| Y | | 9 |
| X | US 2020/0024439 A1 (LG HAUSYS, LTD.) 23 January 2020 (2020-01-23) | 1-8, 10 |
| | claims, paragraphs [0001]-[0015], [0041]-[0055], [0090]-[0104], fig. 1 | |
| Y | | 9 |
| X | KR 10-2020-0025050 A (LG HAUSYS, LTD.) 10 March 2020 (2020-03-10) | 1-6, 8, 10 |
| | claims, paragraphs [0001]-[0023], [0046]-[0077], [0091]-[0158], fig. 1 | |
| Y | | 9 |
| X | JP 2016-150473 A (LINTEC CORP.) 22 August 2016 (2016-08-22) | 1, 2, 5, 7, 10 |
| | claims, paragraphs [0010]-[0043], fig. 1-5 | |
| X | JP 2020-163829 A (DAINIPPON PRINTING CO., LTD.) 08 October 2020 (2020-10-08) | 1, 2, 5, 8, 10 |
| | claims, paragraphs [0019]-[0040], [0063], [0074]-[0081], [0094], [0098]-[0103], fig. 1-4 | |
| Y | | 9 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2023** | **22 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

<table>
<tr><td colspan="3">International application No.<br>**PCT/JP2023/023147**</td></tr>
</table>

**C.** **DOCUMENTS CONSIDERED TO BE RELEVANT**

| Category* | Citation of document, with indication, where appropriate, of the relevant passages | Relevant to claim No. |
|---|---|---|
| Y | JP 2017-171794 A (TOYO INK SC HOLDINGS CO., LTD.) 28 September 2017 (2017-09-28)<br>claims, paragraphs [0001], [0016], [0023]-[0027], [0080] | 9 |
| Y | US 2016/0152833 A1 (COVESTRO DEUTSCHLAND AG) 02 June 2016 (2016-06-02)<br>claims, paragraphs [0008], [0009], [0042]-[0047] | 9 |
| Y | US 6663952 B1 (WKP WURTTEMBERGISCHE KUNSTSTOFFPLATTEN-WERKE GMBH & CO. KG) 16 December 2003 (2003-12-16)<br>column 3, lines 59-62 | 9 |
| A | JP 2020-111715 A (MITSUBISHI CHEMICAL CORP.) 27 July 2020 (2020-07-27)<br>entire text | 1-10 |
| A | WO 2021/235493 A1 (NIPPON PAINT AUTOMOTIVE COATINGS CO., LTD.) 25 November 2021 (2021-11-25)<br>entire text | 1-10 |
| A | JP 2021-101090 A (TOLI CORP.) 08 July 2021 (2021-07-08)<br>entire text | 1-10 |
| P, A | WO 2022/239270 A1 (TOPPAN PRINTING CO., LTD.) 17 November 2022 (2022-11-17)<br>entire text | 1-10 |

Form PCT/ISA/210 (second sheet) (January 2015)

**INTERNATIONAL SEARCH REPORT**
Information on patent family members

International application No.

**PCT/JP2023/023147**

| Patent document cited in search report | | | Publication date (day/month/year) | Patent family member(s) | | | Publication date (day/month/year) |
|---|---|---|---|---|---|---|---|
| KR | 10-2020-0059905 | A | 29 May 2020 | KR | 10-2022-0083643 | A | |
| US | 2020/0024439 | A1 | 23 January 2020 | WO | 2018/216969 | A1 | |
| | | | | EP | 3632993 | A1 | |
| | | | | KR | 10-2018-0127922 | A | |
| | | | | CN | 110446760 | A | |
| | | | | KR | 10-2021-0018404 | A | |
| KR | 10-2020-0025050 | A | 10 March 2020 | (Family: none) | | | |
| JP | 2016-150473 | A | 22 August 2016 | (Family: none) | | | |
| JP | 2020-163829 | A | 08 October 2020 | WO | 2020/196377 | A1 | |
| JP | 2017-171794 | A | 28 September 2017 | (Family: none) | | | |
| US | 2016/0152833 | A1 | 02 June 2016 | WO | 2014/198749 | A1 | |
| | | | | EP | 3008144 | A1 | |
| | | | | TW | 201522532 | A | |
| | | | | KR | 10-2016-0019444 | A | |
| | | | | CN | 105431498 | A | |
| US | 6663952 | B1 | 16 December 2003 | WO | 2000/022039 | A1 | |
| | | | | EP | 1119589 | A1 | |
| | | | | DE | 19846659 | A | |
| | | | | CA | 2346779 | A | |
| JP | 2020-111715 | A | 27 July 2020 | (Family: none) | | | |
| WO | 2021/235493 | A1 | 25 November 2021 | CN | 115515789 | A | |
| | | | | KR | 10-2023-0013242 | A | |
| | | | | TW | 202200381 | A | |
| JP | 2021-101090 | A | 08 July 2021 | JP | 2018-3521 | A | |
| WO | 2022/239270 | A1 | 17 November 2022 | EP | 4116095 | A1 | |
| | | | | CN | 115623867 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A